# EUROPÄISCHE PATENTANMELDUNG

(11) **EP 1 310 621 A2**
(43) Veröffentlichungstag der Anmeldung: **14.05.2003**
(21) Anmeldenummer: 02023101.5
(22) Anmeldetag: 15.10.2002
(51) Int. Cl.: E05D 3/06

(54) **Türanordnung für Kraftfahrzeuge**

(30) Priorität: 09.11.2001 DE 10155220
(71) Anmelder: DaimlerChrysler AG, 70567 Stuttgart (DE)
(72) Erfinder: Brodt, Martin, 71272 Renningen (DE); Dyrballa, Michael, 71111 Waldenbuch (DE); Wendler, Roland, 71034 Böblingen (DE)

(57) **Zusammenfassung**

Die Erfindung betrifft eine Türanordnung für Kraftfahrzeuge mit einer schwenkbaren Tür (4) und mit wenigstens einem Scharnier (6), über das die Tür an einer ihrer Schmalseiten (5) an der Karosserie angelenkt ist, wobei die Bewegung der Tür (4) zwischen ihrer offenen und geschlossenen Stellung selbsttätig gesteuert um zwei annähernd parallel durch das Scharnier verlaufende Drehachsen abläuft.

Erfindungsgemäß läuft die Bewegung der Tür (4) beim Öffnen in zwei aufeinander folgenden Stufen ab, in deren erster Bewegungsstufe der scharnierseitige Endbereich (5) der Tür (4) aus der Türöffnung (2) heraus und der schlossseitige Endbereich (7) der Tür (4) durch Führungsmittel (28,29) entlang der Türöffnung bis in eine Freigabestellung schwenk-schiebegeführt sind, wonach die mit der Tür bewegte Drehachse (21) aus der Türöffnung (2) herausverlagert ist, und in deren zweiter Bewegungsstufe die Tür (4) ausschließlich um die verlagerte Drehachse (21) schwenkbar ist.

## Beschreibung

Die Erfindung betrifft eine Türanordnung für Kraftfahrzeuge der im Oberbegriff des Anspruchs 1 angegebenen Art.

Eine solche Türanordnung ist aus der DE 19754417 A1 bereits bekannt. Die bekannte Türanordnung umfasst eine Tür, die um zwei annähernd parallele Achsen bewegbar ist; eine erste, fahrzeugfeste Drehachse und eine zweite, mit der Tür bewegte Drehachse. Ein an Tür- und Karosserie angelenkter Steuerhebel steuert den Bewegungsablauf beim Öffnen und Schließen der Tür, wodurch sich eine Schwenk-Schiebebewegung derselben ergibt.

Infolge der für die Bewegungssteuerung der Tür vorgesehenen Scharniergestaltung lässt sich der Öffnungswinkel der Tür nicht ohne weiteres auf einen Winkel von 90 Grad oder mehr vergrößern.

Außerdem wird die Tür in der ersten Öffnungsbewegungsphase nur unwesentlich längsverschoben. Bei Überdeckung zwischen geschlossener Tür und benachbarten Karosseriebauteilen kann eine stärkere Längsverschiebung in dieser Öffnungsbewegungsphase zur Aufhebung der Überdeckung jedoch konstruktiv erforderlich sein.

Aufgabe der Erfindung ist es, eine Türanordnung für Kraftfahrzeuge der im Oberbegriff des Anspruchs 1 genannten Art dahingehend weiterzuentwickeln, dass die Eignung für Öffnungswinkel der Tür von mehr als 90 Grad verbessert ist sowie die konstruktive Freizügigkeit bei der Gestaltung der Türöffnung deutlich vergrößert ist.

Diese Aufgabe wird erfindungsgemäß durch die Merkmale des Anspruchs 1 gelöst. Weitere die Erfindung in vorteilhafter Weise ausgestaltende Merkmale enthalten die Unteransprüche.

Ein mit der Erfindung erzielter Vorteil besteht darin, dass die geschlossene Tür in ihrem schlossseitigen Endbereich in Abhängigkeit vom Verschiebeweg der die Tür in diesem Endbereich steuernden Führungsmittel von einem benachbarten Karosseriebauteil überdeckt sein kann. Der Freiraum zu Öffnung der Tür um einen Winkel von mehr als 90 Grad ergibt sich durch die Freigabe des schlossseitigen Endbereiches der Tür in Verbindung mit der Verlagerung der türseitigen Drehachse aus der Türöffnung während der ersten Bewegungsstufe beim Öffnen.

Um die Handhabung zu erleichtern, kann die Tür in der ersten oder in beiden Bewegungsstufen über eine Antriebsanordnung bewegt werden.

Ein kompakter Aufbau und eine platzsparende Anordnung des Antriebs können mittels rotierender Antriebselemente erzielt werden.

Ein besonders einfacher und zuverlässiger Antrieb kann ein Hydrauliksystem mit zwei an sich bekannten Arbeitszylindern umfassen.

Unabhängig von der Bewegungsart der Antriebelemente ist es für der Abfolgesteuerung der Bewegungsstufen von Vorteil, wenn die Tür in ihrer ersten und zweiten Bewegungsstufe über jeweils ein zugeordnetes Antriebselement bewegt wird.

Eine zuverlässige Festlegung der geschlossenen Tür kann über ein oberes und ein unteres Führungsmittelpaar erfolgen, die auf entgegengesetzten Seiten ihres schlossseitigen Endbereiches angeordnet sind.

Zur manuellen Notöffnung der Tür können die Führungsmittel beider Führungsmittelpaare bei geschlossener Tür voneinander lösbar sein. Dies ist unter sicherheitstechnischen Gesichtspunkten für Kraftwagen von besonderer Bedeutung, die ausschließlich schwenk-schiebegeführte Seitentüren aufweisen.

Die Notbetätigung der Tür kann dabei analog zur Öffnungsbetätigung üblicher schwenkbarer Türen z. B. mittels eines Türgriffs erfolgen. Dadurch ist sichergestellt, dass ein Nothelfer die Tür in bekannter Weise von außen öffnen kann. Im einfachsten Fall können die Führungsmittelpaare dazu als Überlastkupplungen ausgebildet sein, welche die Tür freigeben, sobald diese mit einem vorgegebenen Kraftniveau aufschwenkbelastet wird.

Um eine kosten- und gewichtssparende Bauweise zu erreichen, kann die Tür mittels eines Zentralscharniers am Rahmen angelenkt sein.

Die geschlossene Tür kann an in ihrem schlossseitigen Endbereich von einer gegenläufig zu dieser schwenkbaren, zweiten Tür überdeckt sein, wobei sich erste und zweite Tür unabhängig von einander öffnen und schließen lassen. Diese Überdeckung ist insbesondere zwischen vorderer und hinterer Seitentür bei B-säulenlosen Fahrzeugen vorteilhaft, da hierdurch der Eindrückwiderstand der Seitenwand erhöht werden kann.

Um bei B-säulen-losen Fahrzeugen eine zuverlässige Verriegelung der zweiten, schwenkbaren Tür zu gewährleisten, kann diese im geschlossenen Zustand über ein übliches Drehfallenschloss mit einem Schließbügel verriegelbar sein, der an der Stirnseite der ersten Tür angeordnet ist. Damit die zweite Tür auch bei geöffneter erster Tür zuverlässig in ihrer geschlossenen Stellung gehalten ist, kann die zweite Tür über eine zusätzliche Verriegelungsvorrichtung am Schweller der Karosserie festlegbar sein.

Nachfolgend wird ein Ausführungsbeispiel der Erfindung anhand einer zeichnerischen Darstellung näher erläutert.

In der Darstellung zeigen:
- Fig. 1: eine Seitenansicht einer Kraftwagenkarosserie mit zwei gegenläufigen Seitentüren im geschlossenen Zustand,
- Fig. 2: die hintere Seitentür gemäß Fig. 1 samt Anschluss an die vordere Tür in einem Horizontalschnitt,
- Fig. 3: das Türscharnier der hinteren Tür mit Arbeitszylindern und Führungsmitteln,
- Fig. 4: eine Prinzipskizze des Bewegungsablaufes beim Öffnen der hinteren Tür und
- Fig. 5: die Seitenwand gemäß Fig. 1 bei vollständig geöffneten Türen.

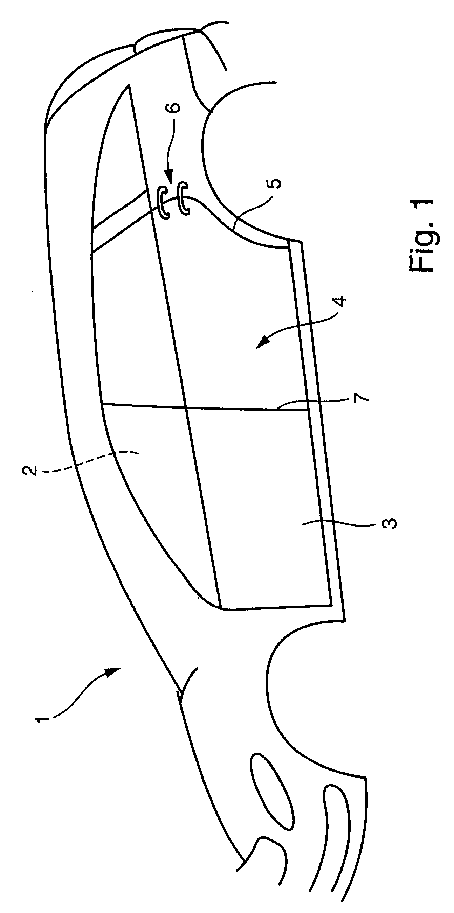

In Fig. 1 ist von einem Kraftwagen 1 nur der seitliche Teil der Karosserie mit einer Türöffnung 2 dargestellt, die von einem aus A-Säule, C-Säule, Schweller und seitlichem Dachrahmen gebildeten Rahmen der Karosserie begrenzt ist.

Die durchgehende Türöffnung 2 der B-säulenlosen Seitenwand ist durch eine vordere 3 und eine hintere seitliche Tür 4 verschlossen, die unmittelbar aneinander angrenzen und flächen-bündig mit der Seitenwand abschließen.

Die vordere Tür 3 ist über ein übliches Türscharnier an der A-Säule der Karosserie angelenkt und somit schwenkbar gelagert. Die hintere Tür 4 ist an ihrer hinteren Scharnierseite 5 mittels eines Zentralscharniers 6 an der C-Säule der Karosserie angelenkt und zusätzlich nahe ihrer vorderen Schlossseite 7 über Führungsmittel mit der Karosserie verbunden.

Die geschlossene vordere Tür 3 ist an ihrer hinteren Stirnseite mittels eines üblichen Drehfallenschlosses mit einem nicht gezeigten Schließbügel verriegelt, der an der Schlossseite 7 der hinteren Tür 4 angeordnet ist. An der unteren Schmalseite der vorderen Tür 3 ist im hinteren Endbereich eine nicht dargestellte zusätzliche lösbare Verriegelungsvorrichtung angeordnet, mittels der die geschlossene Tür 3 am Schweller festgelegt ist.

Die geschlossene vordere 3 und hintere Tür 4 sind über Dichtanordnungen am jeweiligen Türumfang gegenüber der Karosserie abgedichtet.

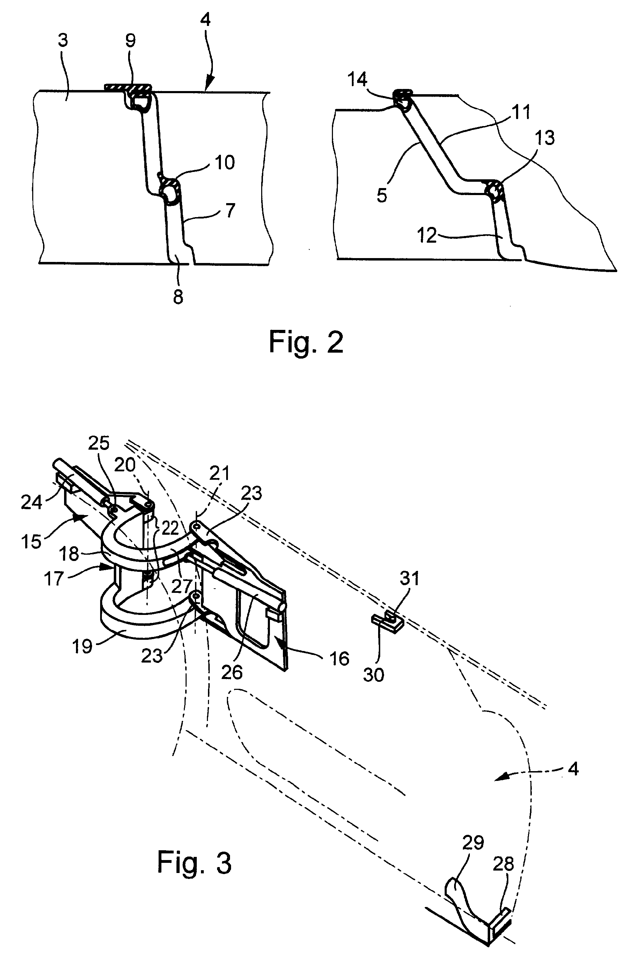

In Fig. 2 ist ein horizontaler Schnitt durch die hintere Tür 4 gezeigt.

Die hintere Stirnseite der vorderen Tür 3 und die Schlossseite 7 der hinteren Tür 4 begrenzen einen vorderen Türspalt 8, der über ein inneres 9 und ein äußeres Dichtprofil 10 abgedichtet ist. Die beiden Dichtprofile 9 und 10 aus gummielastischem Material sind an der Schlossseite 7 der hinteren Tür 4 befestigt und erstrecken sich über die gesamte Höhe des Türspaltes 8. Das innere Dichtprofil 9 liegt quer zur Türöffnung 2 an einer Stufe der Stirnseite der vorderen Tür 3 an und überdeckt diese an ihrer Innenseite mit einem Dichtfinger bzw. einer Dichtlippe.

Die hintere Stirnseite der vorderen Tür 3 weist außen einen annähernd rechtwinklig abgewinkelten Endbereich auf, der einen zurückspringend angeordneten Bereich der Schlossseite 7 der hinteren Tür 4 überdeckt, während an der Schlossseite 7 der hinteren Tür 4 innen ein annähernd rechtwinklig abgewinkelter Endbereich ausgebildet ist, der einen zurückspringend angeordneten Bereich der Stirnseite der vorderen Tür 3 überdeckt.

Die Scharnierseite 5 der hinteren Tür 4 begrenzt mit einer Gegenfläche 11 der C-Säule der Karosserie einen hinteren Türspalt 12, der über seine gesamte Höhe mittels eines äußeren 13 und eines inneren Dichtprofils 14 abgedichtet ist. Die beiden Dichtprofile 13 und 14 aus gummielastischen Material sind an der Gegenfläche 11 der C-Säule befestigt.

Die Scharnierseite 5 weist außen einen annähernd rechtwinklig abgewinkelten Endbereich auf, der einen zurückspringend angeordneten Bereich der Gegenfläche 11 überdeckt.

In Fig. 3 ist das Zentralscharnier 6 an der hinteren Tür 4 dargestellt. Das Scharnier 6 umfasst eine karosserieseitige 15 und eine türseitige Konsole 16, die durch einen U-förmig gekrümmten Hebelarm 17 gelenkig miteinander verbunden sind.

Der Hebelarm 17 des Scharniers umfasst einen oberen 18 und einen unteren Schenkel 19 mit rechteckförmigen Querschnitt, die den gleichen U-förmig gekrümmten zum Fahrzeugäußeren geöffneten Verlauf aufweisen und sind nahe ihrer hinteren Endbereiche durch eine rechteckförmige Platte miteinander verbunden.

Die vorderen und hinteren Endbereiche des oberen 18 und des unteren Schenkels 19 sind zylindrisch ausgebildet. Die hinteren zylindrischen Endbereiche von oberem 18 und unterem Schenkel 19 sind mit der karosserieseitigen Konsole 15 um eine erste, fahrzeugfeste Drehachse 20 drehbar verbunden, die annähernd parallel zur Hochachse verläuft.

Die vorderen zylindrischen Endbereiche von oberem 18 und unterem Schenkel 19 sind mit der türseitigen Konsole 16 um eine zweite, mit der Tür bewegte Drehachse 21 drehbar verbunden, die annähernd parallel zur Hochachse verläuft.

Die karosserieseitige Konsole 15 ist etwas unterhalb der Bordkante an der Innenseite der C-Säule befestigt. Die plattenförmig ausgebildete Konsole 15 umfasst einen hinteren rechteckförmigen Bereich, an den ein sich zur Türöffnung 2 trapezförmig erweiternder Bereich anschließt. Die Konsole 15 weist am oberen und unteren Endbereich ihrer vorderen Stirnseite Aufnahmekonsolen 22 auf, in denen der obere 18 und der untere Schenkel 19 des Hebelarms 17 mittels Bolzen drehbar um die fahrzeugfeste Drehachse 20 gelagert sind.

Die türseitige Konsole 16 ist auf annähernd gleicher Höhe wie die karosserieseitige Konsole 15 an der Innenseite der Tür 4 nahe ihrer Scharnierseite 5 angeordnet.

Die türseitige Konsole 16 ist als rechteckförmige Platte mit einer rechteckförmigen Öffnung in ihrem mittleren Bereich aus-gebildet. Je zwei Rippen entlang des oberen und des unteren Endbereichs der Konsole 16 laufen zum hinteren Türspalt 12 als Aufnahmekonsolen 23 aus, in denen die zylindrischen vorderen Endbereiche des Hebelarms 17 angeordnet und mittels Bolzen drehbar um die türseitige Drehachse 21 gehalten sind. Die Tür 4 wird von zwei Arbeitszylindern angetrieben. Der erste Arbeitszylinder 24 steuert die Bewegung der Tür 4 um die fahrzeugfeste Drehachse 20.

Der zylinderseitige Endbereich des Arbeitszylinders 24 ist drehbar um die Hochachse mittels eines Bolzens mit einem hinteren abgewinkelten Endbereich der karosserieseitigen Konsole 15 verbunden. Das Ende der Kolbenstange des Zylinders 24 ist drehbar um die Hochachse mittels eines weiteren Bolzens an einem vom oberen Schenkel 18 des Hebelarms 17 abstehenden Befestigungsauge 25 angebracht, das in einem Abstand zur fahrzeugfesten Drehachse 20 im hinteren Bereich des Schenkels 18 angeordnet ist.

Der zweite Arbeitszylinder 26 steuert die Bewegung der Tür 4 um die türseitige Drehachse 21.

Der zylinderseitige Endbereich des zweiten Arbeitszylinders 26 ist um die Hochachse drehbar mittels eines Bolzens an einem vorderen abgewinkelten Endbereich der türseitigen Konsole 16 befestigt. Das Ende der Kolbenstange des zweiten Arbeitszylinders 26 greift an einem Befestigungspunkt 27 am vorderen Bereich des oberen Schenkels 18 an, der in einem Abstand zur türseitigen Drehachse 21 angeordnet ist. Das Ende der Kolbenstange greift dabei in eine als Längsschlitz ausgebildete Öffnung des oberen Schenkels 18 ein und ist mittels eines Bolzens um die Hochachse drehbar befestigt.

Um die Öffnung klein zu gestalten und somit ihren Einfluss auf die Bauteilfestigkeit zu verringern, weist die Öffnung senk-recht zur Hochachse einen sich zum zweiten Arbeitszylinder 26 trapezförmig erweiternden Querschnitt auf.

Der erste 24 und der zweite Arbeitszylinder 26 werden über ein von Verdeckantrieben bekanntes hydraulisches Betätigungssystem betrieben.

An der Innenseite der Tür 4 ist in einem unteren Endbereich nahe der Schlossseite 7 an einer abstehenden Halterung eine Führungsrolle 28 angebracht, die an ihrem Umfang in einer am Schweller der Karosserie festgelegten Führungsschiene 29 geführt ist.

Die Führungsschiene 29 weist einen rechteckförmigen Hohlquerschnitt auf, in dem die Führungsrolle 28 angeordnet ist bzw. läuft, wobei die Halterung der Führungsrolle 28 über eine Öffnung an der äußeren Längsseite der Führungsschiene 29 in dieselbe eingreift.

Die Führungsschiene 29 verläuft entlang eines vorderen Teilabschnittes der Türöffnung 2 gekrümmt und dabei schräg nach außen.

Die geschlossene Tür 4 ist über die Führungsrolle 28 im vorderen Endbereich der Führungsschiene 29 quer zur Türöffnung 2 gehalten.

Im hinteren Endbereich der Führungsschiene 29 ermöglicht eine rechteckförmige Öffnung in ihrer äußeren Längsseite eine Verlagerung der Führungsrolle 28 aus der Führungsschiene 29 bei längsverschobener Tür 4.

Am seitlichen Dachrahmen der Karosserie ist nahe der Schlossseite der geschlossenen Tür 4 eine kurze Halteschiene 30 befestigt. Die Halteschiene 30 umfasst einen inneren und einen kurzen äußeren Schenkel, die einen kreisförmigen, sich nach hinten trapezförmig erweiternden Hohlquerschnitt umschließen. Bei geschlossener Tür 4 greift ein nicht dargestellter zylindrischer Haltebolzen 31 der Tür 4 in den Hohlquerschnitt der Halteschiene 30 ein, so dass die Tür 4 an ihrer Schlossseite 7 zusätzlich im oberen Endbereich gehalten ist.

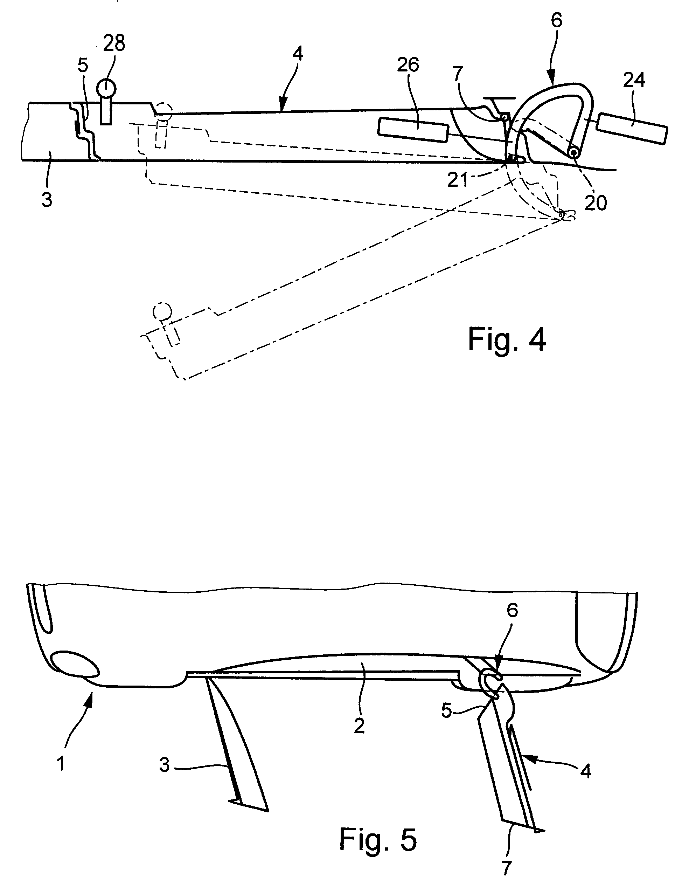

In Fig. 4 ist der Bewegungsablauf beim Öffnen der hinteren seitlichen Tür 4 in einer Prinzipskizze dargestellt.

Die durchgezogenen Linien zeigen die geschlossene Stellung der Tür 4. Die türseitige Drehachse 21 des Scharniers 6 ist innerhalb der Türöffnung 2 angeordnet. Bei geschlossener Tür ist die Führungsrolle 28 in vorderen Endbereich der karosserieseitigen Führungsschiene 29 quer zur Türöffnung 2 gehalten. Der erste Arbeitszylinder 24 ist in seiner maximal zusammengezogenen Stellung.

Die Öffnungsbewegung der Tür 4 läuft ablaufgesteuert in zwei hintereinander geschalteten Stufen ab.

In der ersten Bewegungsstufe wird die Tür 4 bis in eine Freigabestellung schwenk-schiebebewegt, die in Fig. 4 durch gestrichelte Linien dargestellt ist. Dazu wird der erste Arbeitszylinder 24 expandiert, wodurch das Scharnier 6 und die Scharnierseite 5 der Tür 4 um die fahrzeugfeste Drehachse 20 aus der Türöffnung 2 heraus geschwenkt werden.

Der zweite Arbeitszylinder 26 ist während gesamten ersten Bewegungsstufe drucklos geschaltet, also widerstandsarm verschiebbar.

Da die fahrzeugfeste Drehachse 20 und die türseitige Drehachse 21 bei geschlossener Tür 4 in einer Ebene liegen, die annähernd parallel zur Türöffnung 2 verläuft, ergibt sich zu Beginn der ersten Bewegungsstufe für die Scharnierseite 5 eine annähernd senkrecht zur Türöffnung 2 nach außen verlaufende Tangentialverschiebung.

Die Schlossseite 7 der Tür 4, die etwas vor der Führungsrolle 28 angeordnet ist, wird zu Beginn der ersten Bewegungsstufe entsprechend mit einer annähernd senkrecht zur Türöffnung 2 nach innen verlaufenden Tangente um die Drehachse der im vorderen Endbereich der Führungsschiene 29 gehaltene Führungsrolle 28 geschwenkt.

Dabei heben die an der Schlossseite 7 befestigten Dichtprofile 9 und 10 von der vorderen Tür 3 ab und der Schließbügel an der hinteren Tür 4 wird aus dem Drehfallenschloss an der vorderen Tür 3 verlagert, welches zuvor unter Ansteuerung durch das Betätigungssystem selbsttätig entriegelt wurde.

Im weiteren Ablauf der ersten Bewegungsstufe wird die Schlossseite 7 der hinteren Tür 4 entlang der Führungsschiene 29 bis in die Freigabestellung schiebegeführt, wobei der mit der Tür 4 bewegte Haltebolzen 31 aus der Gabelöffnung der Halteschiene 30 herausverschoben wird.

In der Freigabestellung ist die türseitige Drehachse 21 aus der Türöffnung 2 herausverlagert. Die Führungsrolle 28 der Tür 4 ist im vorderen Endbereich der Führungsschiene 29 angeordnet, in dem sich eine Öffnung zum Ausfädeln derselben befindet. Der erste Arbeitszylinder 24 nimmt in der Freigabestellung seine maximal expandierte Endstellung ein, wonach die zweite Bewegungsstufe eingeleitet wird.

In der zweiten Bewegungsstufe wird die fahrzeugfeste Drehachse 20 mittels des ersten Arbeitszylinders 24, der während der gesamten zweiten Bewegungsstufe unter Druck steht, in ihrer Stellung gehalten. Der zweite Arbeitszylinder 26 wird expandiert, wodurch die Tür 4 um die türseitige Drehachse 21 bis in ihrer geöffnete Stellung schwenkbewegt wird, die in Fig. 4 durch strichpunktierte Linien dargestellt ist.

In der geöffneten Stellung der Tür 4 hat der zweite Arbeitszylinder 26 seine maximal expandierte Endstellung eingenommen.

In Fig. 5 ist der seitliche Teil der Karosserie des Kraftwagens 1 bei geöffneter vorderer 3 und hinterer Tür 4 dargestellt.

Die geöffnete hintere Tür 4 schließt mit der Seitenwand einen Öffnungswinkel von etwa 110 Grad ein.

Durch eine veränderte Anordnung der Drehachsen 20 und 21 sowie eine Vergrößerung des Hubs der Arbeitszylinder 24 und 26 ließen sich noch größere Öffnungswinkel realisieren.

Beim Schließen der hinteren Tür 4 werden die beschriebenen Bewegungsstufen in umgekehrter Reihenfolge durchlaufen. Die Tür 4 wird zunächst mittels des zweiten Arbeitszylinders 26 um die türseitige Drehachse 21 bis in die Freigabestellung schwenkbewegt, in der die Führungsrolle 28 der Tür 4 in die karosserieseitige Führungsschiene 29 einfädelt. Anschließend wird der zweite Arbeitszylinder 26 drucklos geschaltet und die Tür 4 mittels Kontraktion des ersten Arbeitszylinders 24 bis in ihre geschlossene Stellung schwenkschiebebewegt.

## Patentansprüche

1. Türanordnung für Kraftfahrzeuge mit einer schwenkbaren Tür, die im geschlossenen Zustand über eine Dichtanordnung gegenüber dem die Türöffnung begrenzenden Rahmen der Karosserie abgedichtet ist, mit wenigstens einem Scharnier, über das dies Tür an einer ihrer Schmalseiten am Rahmen angelenkt ist, und mit einer Verriegelung der geschlossenen Tür an ihrer Schlossseite, wobei die Bewegung der Tür zwischen ihrer offenen und geschlossenen Stellung selbsttätig gesteuert um zwei annähernd parallel durch das Scharnier verlaufende Drehachsen abläuft, von denen die erste Drehachse fahrzeugfest angeordnet und die zweite mit der Tür bewegt ist und wobei eine Schwenk-Schiebebewegung der Tür vorgesehen ist,
**dadurch gekennzeichnet,**
**dass** die Bewegung der Tür (4) beim Öffnen in zwei aufeinander folgenden Stufen abläuft, in deren erster Bewegungsstufe der scharnierseitige Endbereich der Tür (4) aus der Türöffnung heraus und der schlossseitige Endbereich der Tür (4) durch Führungsmittel (28,29) entlang der Türöffnung (2) bis in eine Freigabestellung schwenk-schiebegeführt sind, wonach die mit der Tür (4) bewegte Drehachse (21) aus der Türöffnung (2) herausverlagert ist, und in deren zweiter Bewegungsstufe die Tür (4) ausschließlich um die verlagerte Drehachse (21) schwenkbar ist.

2. Türanordnung nach Anspruch 1,
**dadurch gekennzeichnet,**
**dass** die Tür (4) zumindest während ihrer ersten Bewegungsstufe über einen Antrieb (24) bewegt ist.

3. Türanordnung nach Anspruch 2,
**dadurch gekennzeichnet,**
**dass** die Tür (4) über mindestens ein rotierendes Antriebselement bewegt ist.

4. Türanordnung nach Anspruch 2,
**dadurch gekennzeichnet,**
**dass** die Tür (4) über mindestens ein längenveränderbares Antriebselement (24,26) bewegt ist.

5. Türanordnung nach Anspruch 2,
**dadurch gekennzeichnet,**
**dass** der ersten und der zweiten Bewegungsstufe jeweils ein Antriebselement zugeordnet ist.

6. Türanordnung nach Anspruch 5,
**dadurch gekennzeichnet,**
**dass** als Antriebselemente zwei Arbeitszylinder (24,26) eines Hydrauliksystems vorgesehen sind.

7. Türanordnung nach Anspruch 1,
**dadurch gekennzeichnet,**
**dass** die Außenseite der geschlossenen Tür (4) in ihrem schlossnahen Endbereich von einem benachbarten Karosseriebauteil überdeckt ist.

8. Türanordnung nach Anspruch 7,
**dadurch gekennzeichnet,**
**dass** das Karosseriebauteil eine gegenläufig zur ersten Tür (4) schwenkbare zweite Tür (3) ist.

9. Türanordnung nach Anspruch 8,
**dadurch gekennzeichnet,**
**dass** die erste (4) und die zweite Tür (3) im geschlossenen Zustand durch ein Türschloss miteinander verriegelbar sind und die zweite Tür (3) im geschlossenen Zustand über eine zusätzliche Verriegelungsvorrichtung am Rahmen der Karosserie festlegbar ist.

10. Türanordnung nach Anspruch 1,
**dadurch gekennzeichnet,**
**dass** die Führungsmittel (28,29) bei geschlossener Tür (4) zur deren Notöffnung voneinander lösbar sind.

11. Türanordnung nach Anspruch 1,
**dadurch gekennzeichnet,**
**dass** die geschlossene Tür (4) an entgegensetzten Endzonen ihres schlossseitigen Endbereiches über jeweils ein Führungsmittel-paar (28,29;30,31) gehalten ist.

12. Türanordnung nach Anspruch 1,
**dadurch gekennzeichnet,**
**dass** die Tür (4) mittels eines Zentralscharniers (6) am Rahmen angelenkt ist, wobei das Scharnier (6) zwischen den Drehachsen (20,21) einen etwa U-förmig gekrümmten Hebelarm (17) aufweist.
